# EUROPÄISCHE PATENTSCHRIFT

(11) **EP 3 343 816 B1**
(45) Veröffentlichungstag und Bekanntmachung des Hinweises auf die Patenterteilung: **28.08.2019**
(21) Anmeldenummer: 16207433.0
(22) Anmeldetag: 29.12.2016
(51) Int. Cl.: H04J 14/02, H04Q 11/00, H04L 1/00, H04Q 3/00

(54) **DATENÜBERTRAGUNG IN IP-NETZWERK MIT MEHREREN KERNNETZEBENEN**
DATA TRANSMISSION IN IP NETWORK WITH MULTIPLE CORE NETWORK LEVELS
TRANSFERT DE DONNÉES DANS UN RÉSEAU IP AYANT PLUSIEURS NIVEAUX DE RÉSEAU CENTRAL

(43) Veröffentlichungstag der Anmeldung: 04.07.2018
(73) Patentinhaber: Deutsche Telekom AG, 53113 Bonn (DE)
(72) Erfinder: WISSEL, Felix, 64372 Ober-Ramstadt (DE); GUNKEL, Matthias, 64291 Darmstadt (DE); MATTHEUS, Arnold, 63128 Dietzenbach (DE); FRANZKE, Martin, 64285 Darmstadt (DE)
(74) Vertreter: Brandt & Nern Patentanwälte

(56) Entgegenhaltungen:
- EP-A1- 2 940 911
- EP-A1- 3 091 679

## Beschreibung

Die Erfindung betrifft die Datenübertragung in einem IP-Netzwerk mit mehreren Kernnetzebenen. Gegenstand ist ein Verfahren zur Übertragung von Daten in einem IP-Netzwerk mit einem mehrere Netzknoten und mindestens zwei unabhängige Netzebenen mit identischer Struktur aufweisenden Kernnetz, durch dessen Anwendung die sich durch die Verwendung von Schnittstellen mit flexibler Datenübertragungsrate in derartigen IP-Netzwerken eröffnenden Möglichkeiten besser genutzt werden können. Hierbei ist das Verfahren vorzugsweise zur Anwendung in optischen Netzwerken, das heißt in optischen Transportnetzen (OTN = Optical Transport Network oder DWDM = Dense Wavelength Division Multiplexing) vorgesehen, ohne jedoch hierauf beschränkt zu sein. Wenngleich eine Beschränkung der Erfindung auf die Anwendung in optischen Netzwerken auch hinsichtlich der Patentansprüche nur im Hinblick auf solche Ansprüche gegeben sein soll, die sich explizit auf optische Netzwerke beziehen, soll die Erfindung nachfolgend, mit Blick auf das insoweit bevorzugte Anwendungsgebiet vor allem unter Bezug auf optische Netzwerke erläutert werden.

Generell ist es das Bestreben, für zur Datenübertragung dienende Netzwerke eine möglichst hohe Resilienz zu erzielen, also die Widerstandsfähigkeit der Netzwerke - und so auch von IP-Netzwerken - gegenüber auftretenden Fehlern dahingehend zu verbessern, dass ihre allenfalls möglichst geringfügig beschränkte Nutzbarkeit zur Datenübertragung auch im Fehlerfall erhalten bleibt. Ein grundlegender Ansatz zur Erreichung dieses Ziels besteht in der redundanten Auslegung einzelner Teile und Netzelemente eines Netzwerks. Darüber hinaus wird an Lösungen gearbeitet, die es ermöglichen, von einem Fehler betroffene Abschnitte eines Netzwerks nach einer Restauration die Abschnitte nutzender Datenpfade bis zu einer vollständigen Reparatur zumindest mit einer hinsichtlich der zur Verfügung stehenden Datenübertragungsrate eingeschränkten Kapazität weiterhin nutzen zu können.

In naher Zukunft werden zu diesem Zweck Schnittstellen mit einer variabel veränderlichen Datenübertragungsrate zum Einsatz gelangen, nämlich in den im Rahmen der optischen Übertragungstechnik genutzten IP-Netzwerken optische Schnittstellen mit veränderlicher Datenübertragungsrate. Bei optischen Netzwerken werden die Datenübertragungsraten derartiger Schnittstellen voraussichtlich in einem Bereich von 100 GBit/s bis 1.000 GBit/s an die jeweiligen Erfordernisse anpassbar sein. Hierbei wird beispielsweise eine Veränderung der Datenübertragungsrate dieser Schnittstellen in Schritten von 100 GBit/s möglich sein. Denkbar sind aber auch noch feinere Abstufungen bei der Änderung der Datenübertragungsrate beziehungsweise feinere Kapazitätsgranularitäten entsprechender Schnittstellen.

Technisch wird die variable Veränderlichkeit der Datenübertragungsraten beispielsweise durch den wechselnden Einsatz unterschiedlicher Modulationsformen, wie Quadraturphasenumtastung beziehungsweise Quadrature Phase-Shift Keying (QPSK), Quadraturamplitudenmodulation beziehungsweise Quadrature Amplitude Modulation (QAM), nämlich insbesondere 8 QAM und 16 QAM, ermöglicht oder auch durch die Verteilung des Datenstroms auf mehrere gekoppelte Wellenlängen im Sinne eines sogenannten Sliceable Bandwidth Variable Transceiver (S-BVT).

Eine besondere Form des ersten Ansatzes ist die sogenannte Hybridmodulation oder auch Time Division Hybrid Modulation (TDHM), bei der die verschiedenen Modulationsformen in jeweils festen Zeitabschnitten alternierend eingesetzt werden. Durch eine geeignete Festlegung der vorgenannten Zeitabschnitte lassen sich dabei nahezu beliebige effektive Datenübertragungsraten realisieren. Unabhängig von dem jeweils zum Einsatz gelangenden technischen Ansatz werden Schnittstellen, insbesondere optische Schnittstellen, deren Datenübertragungsrate flexibel veränderlich ist, auch als FlexRate-Schnittstellen bezeichnet. Ungeachtet der jeweiligen Art der Ausbildung eines Netzwerks (optisch oder nicht optisch) sollen entsprechende Schnittstellen daher nachfolgend synonym auch solchermaßen bezeichnet werden.

Ein IP-Netzwerk, nämlich ein entsprechendes optisches Telekommunikationsnetz, dessen Netzknoten und Netzelemente derartige FlexRate-Schnittstellen aufweisen, welche in der zuvor beschriebenen Weise zum Einsatz gelangen, wird in der EP 3 091 679 A1 beschrieben.

Die Übertragung von Daten auf der physischen Ebene - das heißt im Falle eines optischen Netzwerks auf der optischen Ebene - definiert in dem OSI-Schichtenmodell die sogenannte Netzzugangsschicht. Darüber liegt die Vermittlungsschicht, welche bei der paketvermittelten Datenübertragung moderner Netzwerke insbesondere durch den Einsatz des Internet Protocol (IP) geprägt ist und daher auch als IP-Ebene bezeichnet werden kann. Ein sehr wesentliches Element des OSI-Schichtenmodells ist es, dass die einzelnen Schichten gegeneinander gewissermaßen separiert sind, so dass die in einer jeweiligen Schicht jeweils umzusetzenden Anforderungen unabhängig von den Gegebenheiten in den anderen Schichten beziehungsweise Ebenen des Schichtenmodells umgesetzt werden können.

Dies bedingt aber auch, dass zum Beispiel auf Veränderungen in der Netzzugangsschicht in der darüber liegenden Vermittlungsschicht, also beispielsweise auf der IP-Ebene, nicht unmittelbar reagiert werden kann. Die in IP-Netzwerken beziehungsweise auf der IP-Ebene eingesetzten Routingprotokolle sind insoweit agnostisch gegenüber der Kapazität der darunter liegenden Netzzugangsschicht und gegenüber dort gegebenenfalls eintretenden Veränderungen, also gegenüber den Gegebenheiten des physischen Übertragungsweges. Auf der IP-Ebene wird dabei von der prinzipiellen Verfügbarkeit der Datenpfade in der Netzzugangsschicht ausgegangen. Nur hierdurch ist es möglich, dass IP-Netzwerke im Fehlerfall neue Wege zwischen Verkehrsquellen und Senken bestimmen können.

Zur Steigerung der Ausfallsicherheit von Übertragungsnetzwerken besteht, wie bereits ausgeführt, eine Möglichkeit darin, deren Kernnetze redundant, das heißt mit mindestens zwei voneinander unabhängigen, hinsichtlich ihrer Struktur vorzugsweise identischen Netzebenen aufzubauen. In derartigen Netzwerken wird dabei üblicherweise hinsichtlich der Datenübertragungsrate eine Lastverteilung zwischen den Netzebenen des Kernnetzes vorgenommen, wobei die Daten über jeweils gleichwertige, in den einzelnen Ebenen aufgebaute Alternativpfade geführt werden.

Ein Kernnetz beziehungsweise Backbone-Netz weist jeweils mehrere Netzknoten und diese Netzknoten miteinander verbindende Netzkanten auf. An den Netzknoten sind jeweils Zugangsnetze an das Kernnetz angebunden. Die angesprochenen Netzkanten sind in den einzelnen Ebenen des Kernnetzes jeweils durch Kabel - bei einem optischen Netzwerk durch optische Kabel - realisiert. Tritt nun auf einer Kante einer dieser Ebenen, beispielsweise durch einen Faserbruch im Kabel eines optischen Netzwerks, ein Fehler auf, so ist es nach dem Stand der Technik und auch nach den einen Einsatz von FlexRate-Schnittstellen vorsehenden Netzwerkkonzepten, wie sie beispielsweise in der schon genannten EP 3 091 679 A1 beschrieben werden, nicht ohne weiteres möglich, bezüglich der zuvor angesprochenen Lastverteilung auf den eingetretenen Fehler zu reagieren. Dies hat im ungünstigsten Fall zur Folge, dass in der mit dem Fehler behafteten Netzebene zwar aufgrund der Anpassbarkeit der Datenübertragungsraten grundsätzlich noch eine Datenübertragung möglich ist, aber aufgrund einer Verminderung der zur Verfügung stehenden Datenübertragungsrate einzelne Datenpakete verloren gehen, während gleichzeitig in einer anderen Netzebene noch Kapazitäten zur Übertragung dieser Datenpakete zur Verfügung stehen würden.

Dem Aspekt der mittels Routern erfolgenden Bestimmung eines Weges für die Übertragung von Daten über ein IP-Netz nachgeordnet sind andere für die Datenübertragung relevante logistische, nämlich sowohl technisch als auch wirtschaftliche Aspekte beziehungsweise Anwendungsszenarien. Das ist zum Ersten das sogenannte "Traffic Engineering", dessen Aufgabe darin besteht, das globale Verkehrsaufkommen optimal über eine bestehende Infrastruktur zu führen. Zum Zweiten ist es das Erreichen einer hohen Resilienz von Paketnetzen, also einer hohen Widerstandsfähigkeit des Übertragungssystems gegenüber Fehlern beziehungsweise Teilausfällen dahingehend, auch im Falle eines Auftretens entsprechender Fehler bis zu einem gewissen Grad noch eine zuverlässige Übermittlung zu übertragender Daten gewährleistet ist. Dies wird dadurch erreicht, dass im Falle der Unterbrechung eines Weges neue Ersatzwege bestimmt werden.

Für beide Anwendungen beziehungsweise Zielstellungen ist es wichtig, dass sich die insgesamt für einen Übertragungspfad beziehungsweise Datenpfad (Übertragungspfad und Datenpfad werden im Kontext der Beschreibung als synonym angesehen) im Netzwerk zur Verfügung stehenden Übertragungskapazitäten nicht ändern, denn ein grundlegender Bestandteil ist die Lastverteilung zwischen gleichwertigen Alternativpfaden. Immer, wenn Routing-Protokolle zwei oder mehr Datenpfade zwischen denselben beiden Routern finden, die bezüglich einer festgelegten Metrik, nämlich einer Kostenfunktion für die Nutzung des Weges, tatsächlich gleich sind, wird der Verkehr zwischen diesen äquivalenten Datenpfaden aufgeteilt. Der dazu eingesetzte Mechanismus heißt "Equal Cost Multi Path" (ECMP). Dabei versucht man, zueinander gehörige Pakete oder Folgen von Paketen, die zu derselben Ende-zu-Ende-Verbindung gehören, immer auf dem gleichen Datenpfad zu lenken, damit die Reihenfolge der Pakete wegen zum Beispiel unterschiedlich langer Laufzeiten auf verschiedenen Wegen nicht durcheinander gerät.

Das wiederum ist wichtig, damit andere Mechanismen, die auf höheren Schichten implementiert sind, nicht gestört werden. Das betrifft insbesondere das wiederholte Senden von einzelnen oder mehreren verlorengegangenen Paketen, wie es bei TCP Verbindungen zum Einsatz kommt (TCP = Transmission Control Protocol). ECMP berechnet zu diesem Zweck nach festgelegten Regeln einen ganzzahligen Zahlenwert aus den relevanten Protokollfeldern (in der Regel Sender- und Zieladresse und die entsprechenden Portangaben). Alle Pakete, die gemäß diesen Regeln zusammen gehören, werden "Flow" genannt, für dessen Zuordnung zu einem Übertragungspfad beziehungsweise Datenpfad durch das Netzwerk es eine festgelegte Zuordnungsvorschrift gibt.

Im Hinblick auf das schon angesprochene, unter den zuvor erläuterten Aspekten bestehende Erfordernis, wonach sich die insgesamt für einen Übertragungspfad im Netzwerk zur Verfügung stehenden Übertragungskapazitäten nicht ändern sollten, stellt es natürlich ebenfalls einen gravierenden Nachteil dar, wenn die aufgrund des Einsatzes von FlexRate-Schnittstellen diesbezüglich grundsätzlich gegebenen Möglichkeiten aufgrund der Restriktionen des OSI-Schichtenmodells nicht genutzt werden können.

Aufgabe der Erfindung ist es, ein Verfahren zur Lösung der zuvor angesprochenen Probleme anzugeben. Dazu soll das Verfahren insbesondere eine effektivere Nutzung der durch die Verwendung von FlexRate-Schnittstellen, also Schnittstellen mit flexibler Datenübertragungsrate, gegebenen Möglichkeiten gestatten, es also ermöglichen, den Vorteil einer fortgesetzten, wenn auch eingeschränkten Nutzbarkeit von mit einem Fehler behafteten Netzkanten in der Praxis möglichst gut zu nutzen.

Die Aufgabe wird durch ein Verfahren mit den Merkmalen des Patentanspruchs 1 gelöst. Vorteilhafte Aus- beziehungsweise Weiterbildungen des Verfahrens sind durch die Unteransprüche gegeben.

Das zur Lösung der Aufgabe vorgeschlagene Verfahren zur Übertragung von Daten in einem IP-Netzwerk geht von einem IP-Netzwerk mit einer Struktur aus, welche nachfolgend zunächst erläutert werden soll. Gemäß dieser Struktur besteht ein entsprechendes IP-Netzwerk aus einem Kernnetz sowie aus einer Mehrzahl an das Kernnetz angebundener Zugangsnetze.

Das vorgenannte Kernnetz weist mehrere territorial verteilt angeordnete Netzknoten auf, bei welchen jeweils mehrere Zugangsnetze an das Kernnetz angebunden sind. Die Netzknoten des Kernnetzes sind untereinander durch Netzkanten in Form von Kabeln miteinander verbunden. Eine ganz wesentliche Eigenschaft eines IP-Netzwerks, für welches die Anwendung des nachfolgend dargestellten Verfahrens in Betracht kommt, besteht dabei darin, dass dessen Elemente zur Erhöhung seiner Ausfallsicherheit redundant ausgebildet sind. Dies bedeutet konkret, dass das Kernnetz mindestens zwei voneinander unabhängige, hinsichtlich ihrer Struktur identische Netzebenen aufweist. Jeweils innerhalb dieser auch (und so auch im Weiteren) als Plane bezeichneten Netzebenen sind alle der bereits angesprochenen Netzknoten durch die Netzkanten untereinander verbunden. Die Verbindung der Netzknoten ist dabei derart, dass zwar nicht jeder Netzknoten mit jedem anderen Netzknoten der betreffenden Plane unmittelbar beziehungsweise direkt verbunden ist, dass aber alle Netzknoten einer Plane untereinander, das heißt gegebenenfalls über einen oder mehrere andere Netzknoten, durch Netzkanten verbunden sind.

Die Netzknoten des Kernnetzes sind bei einem optischen Netzwerk innerhalb jeder Plane durch Label Switch Router und die sie miteinander verbindenden Netzkanten durch optische Kabel ausgebildet. An die Label Switch Router und somit an die Netzknoten einer Plane sind die Zugangsnetze bei einem optischen Netzwerk jeweils mittels eines, ebenfalls über mindestens ein optisches Kabel mit dem jeweiligen Label Switch Router verbundenen Label Edge Routers angebunden. Die Anbindung der Zugangsnetze ist dabei derart, dass der Label Edge Router eines jeweiligen Zugangsnetzes stets an alle Netzebenen beziehungsweise Planes des Kernnetzes angebunden ist, also bezüglich des betreffenden Netzknotens mit dem jeweiligen Label Switch Router jeder der Planes verbunden ist. Hierbei sind zumindest die Label Switch Router gegebenenfalls auch die Label Edge Router mit den Schnittstellen mit flexibler Datenübertragungsrate beziehungsweise mit den FlexRate-Schnittstellen ausgestattet.

Ein im Kontext des erfindungsgemäßen Verfahrens betrachtetes IP-Netzwerk umfasst zudem ein Netzmanagementsystem, mittels welchem das Zusammenwirken der vorgenannten Netzelemente gesteuert wird. Darüber hinaus gibt es ein Element-Managementsystem, mittels welchem die Funktion jedes einzelnen dieser Netzelemente gesteuert wird. Das zuvor angesprochene Zusammenwirken der Netzelemente ist dabei in der Weise organisiert, dass die Datenströme aus den Zugangsnetzen auf die Netzebenen beziehungsweise Planes des Kernnetzes aufgeteilt werden.

In Bezug auf ein optisches Netzwerk bedeutet dies, dass die Label Edge Router, über welche die Zugangsnetze an die Netzknoten des Kernnetzes, nämlich an deren Label Switch Router angebunden sind, einen dem Kernnetz zuzuführenden Datenstrom bezüglich der übertragenen Datenmenge vorzugsweise im Wesentlichen gleichmäßig auf die Netzebenen des Kernnetzes aufteilen. Dies bedeutet, dass der Label Edge Router eines Zugangsnetzes jedem der mit ihm in den einzelnen Planes des Kernnetzes verbundenen Label Switch Router im Hinblick auf die Datenmenge jeweils einen Anteil der dem Kernnetz an dem Netzkoten in Form der Datenströme zuzuführenden Datenmenge zuleitet.

Tritt nun bei der zuvor erläuterten Struktur eines IP-Netzwerkes auf der Netzkante innerhalb einer Plane des Kernnetzes ein Fehler auf - beispielsweise durch die Beschädigung einer oder mehrerer Adern beziehungsweise Fasern eines diese Kante ausbildenden Kabels -, so passen die FlexRate-Schnittstellen ein- und ausgangsseitig dieser Kante nach der Restaurierung (Restoration) der über die fehlerhafte Netzkante geführten Datenpfade ihre Datenübertragungsrate an die aufgrund des Fehlers verminderte Datenübertragungsrate der Netzkante an. Dies hat zur Folge, dass die von dem Fehler betroffene Kante - und das ist der Vorteil des Einsatzes von FlexRate-Schnittstellen - nicht vollständig für die Datenübertragung ausfällt, aber eben nur noch mit einer verminderten Datenübertragungsrate nutzbar ist.

Nach dem Stand der Technik ist es nun so, dass auf diese Tatsache nicht durch eine andere Lastverteilung des Datenverkehrs unmittelbar reagiert werden kann, da die Vermittlungsschicht beziehungsweise die IP-Ebene, wie bereits ausgeführt, bezogen auf die physische Netzzugangsschicht des Schichtenmodells, agnostisch ist. Vielmehr wird die ursprünglich vorgesehene weitgehende gleichmäßige Verteilung der zu übertragenden Daten auf alle Planes beibehalten. Dies hat aber zur Folge, dass es in der Netzebene mit der von dem Fehler betroffenen und daher nur noch mit einer verringerten Datenübertragungsrate nutzbaren Netzkante zu unerwünschten Datenverlusten kommen kann.

Entsprechend dem erfindungsgemäßen Verfahren wird dies vorteilhafterweise jedoch vermieden. Dies geschieht, indem auf den Fehler im Kernnetz im jeweiligen Übergangsbereich zwischen dem Kernnetz und den an den durch die betroffene Netzkante verbundenen Netzknoten an das Kernnetz angebundenen Zugangsnetzen durch eine Änderung der Lastverteilung reagiert wird. Hierzu übermittelt das Netzmanagementsystem eine Information über den an der Netzkante aufgetretenen Fehler und über die infolge dieses Fehlers reduzierte Datenübertragungsrate, also über die hinsichtlich der in einer Zeiteinheit übertragbaren Datenmenge verringerte Kapazität dieser Netzkante in Echtzeit an das Element-Managementsystem. Nach dem Eingang der Information zu dem Fehler steuert dann das Element-Managementsystem Netzelemente des IP-Netzwerks auf der physischen Ebene oder auf der IP Ebene so an, dass zumindest an jedem der durch die fehlerbehaftete Netzkante verbundenen Netzknoten die der vom Fehler betroffenen Plane in einer Zeiteinheit zugeführte Datenmenge (Datenrate) zu Lasten der mindestens einen anderen Netzebene (Plane) reduziert wird.

An dieser Stelle sei darauf hingewiesen, dass die Begriffe "Datenübertragungsrate" und "Datenrate" insoweit im Grunde synonym gebraucht werden, als sie sich auf eine in einer Zeiteinheit (beispielsweise in einer Sekunde) zu übertragende/übertragene Datenmenge (zum Beispiel Gbit) beziehen. Der Grund für die hinsichtlich der Begrifflichkeit dennoch getroffene geringfügige Unterscheidung besteht darin, dass der Begriff "Datenübertragungsrate" für das Vermögen eines Netzelements, wie einer Netzkante oder einer Schnittstelle, steht, eine bestimmte Datenmenge innerhalb der vorgenannten Zeiteinheit zu übertragen, wohingegen der Begriff "Datenrate" eine innerhalb dieser Zeiteinheit einem Teil des Netzwerks zuzuführende oder tatsächlich zugeführte Datenmenge bezeichnen soll.

Vorzugsweise erfolgt dabei eine Reduzierung des der von dem Fehler betroffenen Netzkante beziehungsweise der Netzebene zugeführten Anteils an der Datenrate der zu übertragenden Datenströme in Relation zu der aufgetretenen Verringerung der Datenübertragungsrate auf der von dem Fehler betroffenen Netzkante. Sofern sich demnach die Datenübertragungsrate einer von einem Fehler betroffenen Netzkante um 25 % reduziert, wird vorzugsweise der Anteil des dieser Kante zugeführten Datenstroms hinsichtlich der Datenrate ebenfalls um 25 % reduziert. Erläuternde Ausführungen hierzu sollen später anhand eines Ausführungsbeispiels erfolgen.

Vorzugsweise erfolgt die Änderung der Lastverteilung, also die Reduzierung des auf die Datenrate bezogenen Anteils an den dem Kernnetz zugeführten Datenströmen für die von dem Fehler betroffene Plane, indem die Datenströme mindestens jeweils eines der mit dieser Plane verbundenen Zugangsnetze ausschließlich der von dem Fehler nicht betroffenen Plane des Kernnetzes zugeführt werden.

Wie aus den vorstehenden Ausführungen hervorgeht, wird also das Problem einer einerseits bezüglich einer Netzkante eintretenden Änderung der Übertragungskapazität (der zur Verfügung stehenden Datenübertragungsrate) und der andererseits, bezogen auf einen Übertragungspfad, möglichst beizubehaltenden Übertragungskapazität des Netzwerks insgesamt nicht dadurch gelöst, dass der Verkehr auf Ebene einzelner Pakete oder zueinander gehörender Paketflows separiert wird. Stattdessen werden die intrinsischen Zusammenhänge zwischen verschiedenen Verkehrsflüssen innerhalb des Kernnetzes (also innerhalb der LSR-Wolke, nämlich der Wolke der Label Switch Router des Kernnetzes eines optischen Netzwerks) ignoriert und die Lastverteilung auf einer anderen Granularitätsskala gesteuert. Obwohl also die betrachtete Kapazitätsänderung im Kernnetz passiert und effektiv auch dort beachtet werden muss, damit es nicht zu einem Paketverlust kommt, wird die Anpassung der Lastverteilung außerhalb des Kernnetzes (außerhalb der Label Switch Router-Wolke) vorgenommen, nämlich bei der Verteilung des Verkehrs auf die Planes und nicht bei der Verteilung innerhalb der betroffenen Plane.

Basierend auf einer entsprechenden, beim Element-Managementsystem über den eingetretenen Fehler eingegangenen Information sind unterschiedliche Möglichkeiten der Ansteuerung von Netzelementen des IP-Netzwerks gegeben, um die Lastverteilung zwischen den Netzebenen beziehungsweise Planes des Kernnetzes zu verändern. Wie aus den vorstehenden Ausführungen bereits entnehmbar ist, können derartige Maßnahmen durch das Element-Managementsystem entweder auf der physischen Ebene oder auf der IP-Ebene veranlasst werden, wobei Letzteres die Vermittlungsschicht im OSI-Schichtenmodell betrifft.

Für Maßnahmen auf der IP-Ebene im Übergangsbereich zwischen dem Kernnetz und den an den durch die betroffene Netzkante verbundenen Netzknoten an das Kernnetz angebundenen Zugangsnetzen beziehungsweise im Bereich der Verbindung eines jeweiligen Label Edge Routers eines oder mehrerer Zugangsnetze mit einem Label Switch Router der von dem Fehler betroffenen Netzkante sind mehrere unterschiedliche Möglichkeiten gegeben. Diese bestehen darin, dass:
a) die Metrik des diese Verbindung betreffenden Links auf den höchst möglichen Wert gesetzt wird, oder
b) die IP-Schnittstelle des diese Verbindung betreffenden Links heruntergefahren wird, oder
c) für den diese Verbindung betreffenden Link das IGP deaktiviert wir, so dass dieser Link scheinbar nicht mehr existiert.

Allen vorgenannten Varianten ist gemeinsam, dass im Ergebnis ihrer Anwendung die Verbindung zwischen dem jeweiligen Zugangsnetz und der Netzebene des Kernnetzes mit der betroffenen Netzkante gewissermaßen unterbrochen wird und zwar nicht auf der physischen Ebene sondern der IP-Ebene, also bezogen auf die Vermittlungsschicht. Infolge dessen "sehen" die Router einander auf der IP-Ebene nicht mehr, so dass ein jeweiliger Router eines Zugangsnetzes (Label Edge Router) dem Router am Ende der betroffenen Netzkante des Kernnetzes (Label Switch Router) beziehungsweise in der betroffenen Netzebene (Plane) keine Daten mehr zuleiten kann und daher sämtliche Daten der (den) nicht betroffenen Plane(s) zuleitet.

Bei optischen Netzwerken, bei welchen die optische Ebene die physische Ebene ausbildet, besteht eine Möglichkeiten des Herbeiführens einer geänderten Lastverteilung entsprechend einer vorgesehenen Ausgestaltung des erfindungsgemäßen Verfahrens darin, im Übergangsbereich zwischen dem Label Edge Router eines Zugangsnetzes und dem Kernnetz, genauer gesagt, im Übergangsbereich zwischen einem Zugangsnetz und seiner Verbindung mit dem Label Switch Router der fehlerbehafteten Netzkante in der betroffenen Plane, gewissermaßen einen falschen Alarm auszulösen beziehungsweise einen in diesem Bereich aufgetretenen Fehler vorzutäuschen.

Das heißt, die Behandlung des eigentlich im Kernnetz, nämlich auf einer Netzkante einer Plane des Kernnetzes aufgetretenen Fehlers wird gewissermaßen durch das Vortäuschen eines so tatsächlich nicht vorhandenen Fehlers in den Außenbereich des Kernnetzes, genauer gesagt, in den Übergangsbereich zwischen Kernnetz und einem Zugangsnetz verlagert. Hierbei wird durch den im Übergangsbereich vorgetäuschten Fehler beziehungsweise falschen Alarm ein gezieltes Umrouten des Verkehrs auf der Paketebene in eine (gegebenenfalls mehrere) von dem tatsächlich aufgetretenen Fehler nicht betroffene Plane(s) eingeleitet. Veranlasst und gesteuert wird dieses durch das Element-Managementsystem, welches hierzu durch Implementierung einer entsprechenden Software ertüchtigt wird. Im Zusammenhang damit muss, ebenfalls softwarebasiert, bei der nachgelagerten Verarbeitung der Alarmdaten sichergestellt werden, dass diese künstlich erzeugten Fehler zur Unterscheidung gegenüber echten Fehlern in geeigneter Weise gekennzeichnet werden.

Für die Erzeugung eines solchen falschen Alarms beziehungsweise tatsächlich nicht vorhandenen Fehlers auf der optischen Ebene im Übergangsbereich zwischen der betroffenen Plane des Kernnetzes und mindestens einem Zugangsnetz kommen wiederum unterschiedliche Varianten in Betracht. Diese bestehen darin:
a) mindestens einen Sendelaser des Label Edge Routers des mindestens einen über den Label Switch Router an der betroffenen Netzkante an das Kernnetz angebundenen Zugangsnetzes auszuschalten, oder
b) im Falle eines kohärenten Empfängers, einen Empfangslasers des Label Switch Routers der betroffenen Plane auszuschalten,
oder aber sie bestehen - im Falle einer Anwendung des Verfahrens in einem ROADM-Netz (ROADM = Reconfigurable Optical Add-Drop Multiplexer) - darin:
c) einen Drop-Port des Ausgangs-ROADMs eines dem mindestens einen Zugangsnetz zugeordneten ROADMs intransparent zu schalten, oder
d) einen Add-Port des Eingangs-ROADMs eines den Label Switch Router der betroffenen Plane zugeordneten ROADMs intransparent zu schalten.

In allen vorgenannten Fällen gilt, wenn die technischen Einrichtungen der Label Switch Router feststellen, dass ein Link, beispielsweise durch Ausschalten eines Sendelasers oder intransparent Schalten eines ROADM-Ports, scheinbar nicht mehr vorhanden ist, wird die Information darüber per Interior Gateway Protocol (IGP) im Netz verteilt. Dieser Vorgang dauert zirka eine Sekunde. Anschließend schicken alle Router ihre Pakete an den betroffenen Label Edge Router, also an den Label Edge Router eines empfangenden Zugangsnetzes, nur noch über die intakte(n) Plane(s). Was das intransparent Schalten eines Ports eines ROADMs anbelangt, so kann dies in Abhängigkeit seines jeweiligen konkreten Aufbaus zum Beispiel dadurch bewerkstelligt das ein von einer großen Zahl sehr kleiner Spiegel des ROADMs gewissermaßen aus dem Übertragungsweg herausgeschwenkt wird. Vergleichbares ist auch bei ROADMs möglich, bei deren Ports die Ein- oder Auskopplung von Licht mit Hilfe von Prismen oder optischen Gittern geschieht.

Nachfolgend sollen nochmals der grundsätzliche Lösungsansatz des erfindungsgemäßen Verfahrens und die in einem zur Anwendung des Verfahrens geeigneten IP-Netzwerk, nämlich in einem optischen Netzwerk, gegebenen Verhältnisse anhand von Zeichnungen erläutert werden. Dabei dienen die Zeichnungen weniger der Darstellung des Verfahrens selbst - dieses entzieht sich weitgehend der Möglichkeit einer Darstellung - als der Darstellung netzwerkbezogener Aspekte. Gleichwohl wird im Zusammenhang mit den zu den Zeichnungen gegebenen Ausführungen auch das Verfahren insbesondere anhand von beispielhaften Zahlenwerten in der Art eines Ausführungsbeispiels nochmals erläutert. Die Zeichnungen zeigen im Einzelnen:
- Fig. 1:: die grundsätzliche Struktur eines für den Einsatz des Verfahrens geeigneten IP-Netzwerks, nämlich eines optischen Netzwerks,
- Fig. 2:: eine mögliche Lastverteilung in einem bezüglich seiner Struktur dem Netzwerk gemäß Fig. 1 entsprechenden IP-Netzwerk,
- Fig. 3:: komplexere Verkehrsbeziehungen in einem IP-Netzwerk gemäß der in Fig. 1 gezeigten Art,
- Fig. 4:: Details einer möglichen Konfiguration an einem Netzknoten eines IP-Netzwerks mit einer Struktur gemäß der Fig. 1.

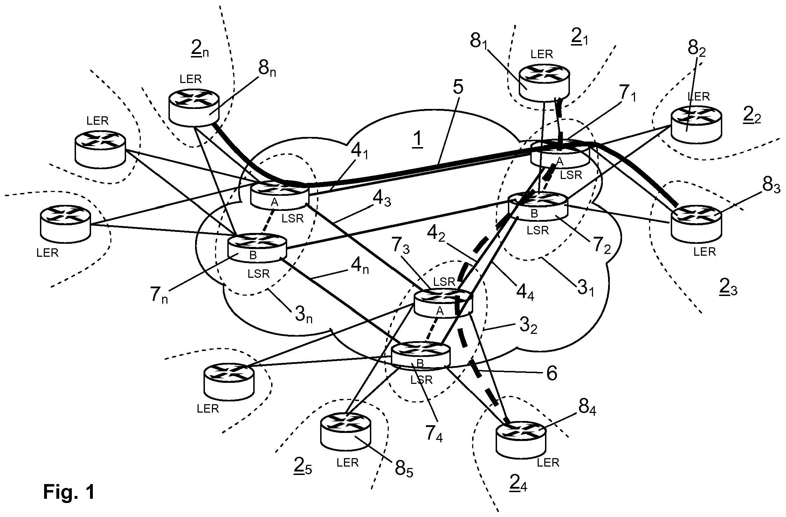

Die Fig. 1 zeigt in einer schematischen und stark vereinfachten Darstellung die grundsätzliche Struktur eines optischen IP-Netzwerks, wie sie der erfindungsgemäßen, sich auf ein Verfahren beziehenden Lösung zugrunde liegt. Demnach besteht ein solches IP-Netzwerk aus einem Kernnetz 1 in Form einer LSR-Wolke (Wolke von Label Switch Routern 7₁ - 7ₙ) und mehreren an dieses Kernnetz 1 über LER, nämlich Label Edge Router 8₁ - 8ₙ, angebundenen Zugangsnetzen 2₁ - 2ₙ. Zur Vereinfachung sind zum einen nur wenige der in einem solchen IP-Netzwerk in dem Kernnetz 1 vorhandenen Label Switch Router 7₁ - 7ₙ gezeigt und zum anderen bezüglich der Zugangsnetze 2₁ - 2ₙ, über welche jeweils einer Vielzahl von Endgeräten der Zugang zum Kernnetz 1 des IP-Netzwerks zum Zweck eines Datenaustauschs ermöglicht wird, nur die Label Edge Router 8₁ - 8ₙ dargestellt.

Wie aus der symbolischen Darstellung erkennbar ist, weist das Kernnetz 1gemäß dem gezeigten Beispiel zwei Netzebenen, das heißt Planes, hier als Plane A und Plane B bezeichnet, auf. Beide Planes A, B sind voneinander unabhängig, aber, wie zu ersehen, hinsichtlich ihrer Struktur identisch. Demnach sind in der beispielhaft gezeigten Struktur an drei Netzknoten 3₁ - 3ₙ des Kernnetzes 1 jeweils zwei Label Switch Router 7₁ - 7ₙ, nämlich ein Label Switch Router 7₁ - 7ₙ je Plane A, B, angeordnet. Innerhalb einer jeden Plane A, B sind die Label Switch Router 7₁ - 7ₙ durch Netzkanten 4₁ - 4ₙ untereinander verbunden, welche durch entsprechende optische Kabel ausgebildet werden.

Die Zugangsnetze 2₁ - 2ₙ, nämlich ihre Label Edge Router 7₁ - 7ₙ, sind an den einzelnen Netzwerkstandorten, welche durch die Netzknoten 3₁ - 3ₙ repräsentiert werden, mit jeweils allen Label Switch Routern 7₁ - 7ₙ, also hier mit jeweils beiden Planes A, B des Kernnetzes 1, verbunden. Zumindest die Label Switch Router 7₁ - 7ₙ, gegebenenfalls auch die Label Edge Router 8₁ - 8ₙ, sind mit den hier nicht dargestellten optischen Schnittstellen mit flexibler Datenübertragungsrate (FlexRate-Schnittstellen) ausgestattet. In der Figur ebenfalls nicht dargestellt sind das Netzmanagementsystem, welches das Zusammenwirken der Netzelemente des Netzwerks steuert, sowie das Element-Managementsystem, durch welches die Funktionen der jeweiligen Netzelemente selbst gesteuert werden.

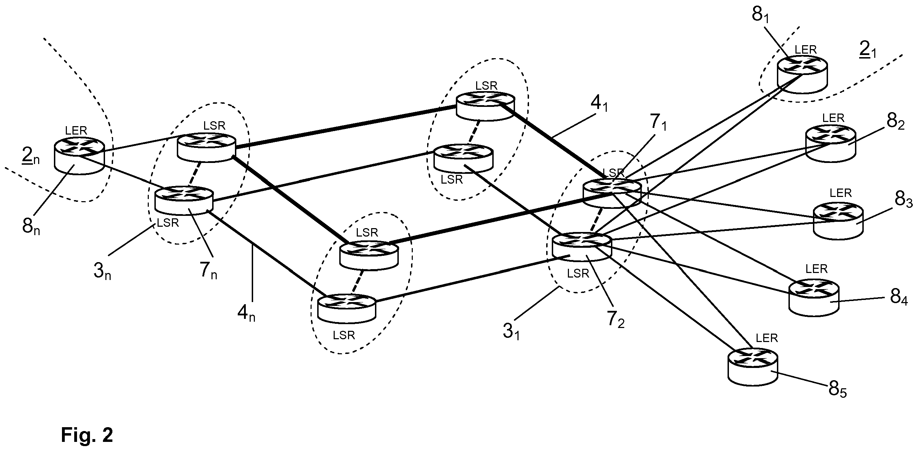

Die Fig. 2 zeigt beispielhaft eine mögliche Lastverteilung, also die Verteilung der durch die Verkehrsströme zwischen den Zugangsnetzen 2₁ - 2ₙ und ihren Label Edge Routern 8₁ - 8ₙ sowie den Label Switch Routern 7₁ - 7ₙ im Kernnetz 1 insgesamt verursachten Last. Anhand der Darstellung soll diese Lastverteilung nun zunächst für den Fall eines fehlerfreien Betriebs des Netzwerks und dann im Hinblick auf die sich nach dem Auftreten eines Fehlers bei Anwendung des erfindungsgemäßen Verfahrens einstellenden Verhältnisse erläutert werden.

Es sei angenommen, dass jeder Label Switch Router 7₁ - 7ₙ mit einer Kapazität von jeweils 400 Gbit/s mit seinen Nachbarn, respektive den innerhalb derselben Plane A, B benachbarten Label Switch Routern 7₁ - 7ₙ verbunden ist. Hierbei gelte eine Planungsregel, wonach ein solcher IP-Link nur bis etwa 80 % ausgelastet werden soll, da der Paketverkehr häufig eine Art Volatilität mit einer - zum Beispiel bei besonderen Ereignissen oder herausragenden Meldungen - zuweilen temporär stark ansteigenden Last zeigt. Eine mittlere Belastung von 80 % bietet insoweit eine hinreichend gute Stabilität. In Summe kann also bei einer optimalen Ausnutzung der Verbindungen die Gesamtdatenmenge von 2 * 80 % * 400 Gbit/s = 640 Gbit/s pro Plane A, B an den in der Zeichnung linken LER 8ₙ geliefert werden.

Diese in Summe 1280 Gbit/s (pro Verbindung 320 Gbit/s) können hinsichtlich der Zuführung zum Kernnetz 1 zunächst beliebig auf die fünf rechts dargestellten Label Edge Router 8₁ - 8₅ verteilt sein, also in gleichmäßiger Verteilung von diesen in das Kernnetz 1 ausgesendet werden. Ein Szenario wäre, dass jeder Label Edge Router 8₁ - 8₅ um die 250 Gbit/s Verkehr in Richtung des Kernnetzes erzeugt (die präzise Rechnung ergäbe 256 Gbit/s).

Wenn nun in Folge eines Faserbruchs und einer sich anschließenden Restoration der optischen Verbindung entlang der Netzkante 4₁ die Übertragungskapazität (bei der Übertragung von Daten über die Netzkante 4₁ mögliche Datenübertragungsrate) von 400 Gbit/s auf 300 Gbit/s sinkt, würde jeder der rechts in der Fig. dargestellten Label Edge Router 8₁ - 8₅ ohne Anwendung des erfindungsgemäßen Verfahrens oder anderer geeigneter Maßnahmen weiterhin versuchen, 320 Gbit/s auf diese Kante 4₁ zu geben. Dies würde aber zu einem Datenverlust beziehungsweise zu einem Verlust von Datenpaketen in einer Größenordnung von 20 Gibt/s führen. Und das, obwohl die Gesamtkapazität der betroffenen Plane A (mit nun immer noch 400 Gbit/s + 300 Gbit/s = 700 Gbit/s) für die Belastung der Plane A mit einem Datenaufkommen von 640 Gbit/s eigentlich ausreichen würde.

Hier setzt nun die erfindungsgemäße Lösung an. Ausgehend von den zuvor genannten Zahlen würde es nämlich zum Beispiel ausreichen, die Lastverteilung in einem der fünf Label Edge Router 8₁ - 8₅ auszuschalten, also den kompletten über diesen Label Edge Router 8₁ - 8₅ dem Kernnetz 1 zugeführten Datenverkehr ausschließlich der nicht betroffenen Plane B zuzuleiten. Damit erreicht man eine Asymmetrie zwischen den Planes A, B von 4 * 128 Gbit/s (Plane A) gegenüber 6 * 128 Gbit/s (Plane B), also von 512 Gbit/s (Plane A) zu 768 Gbit/s (Plane B).

Ohne im Bereich der Label Switch Router 7₁ - 7ₙ also im Kernnetz 1 selbst Maßnahmen ergreifen zu müssen, kann demnach der in Summe für das Kernnetz 1 pro Plane A, B anfallende Datenverkehr über das Kernnetz 1 übertragen werden, denn die der Plane A zugeführten 512 Gbit/s werden hälftig auf die beiden innerhalb der Plan A aufgebauten Verbindungen mit Kapazitäten von 400 Gbit/s beziehungsweise 300 Gbit/s (im Falle der die vom Fehler betroffene Netzkante 4₁ einbeziehenden Verbindung) verteilt und die der Plane B zugeführten 768 Gbit/s auf deren beide intakte 400 Gbit/s-Verbindungen. In keinem Fall wird Datenverkehr verworfen beziehungsweise gehen Datenpakete verloren.

Die Up-Links zwischen den Label Edge Routern 8₁ - 8ₙ und den Label Switch Routern 7₁ - 7ₙ, also ihre Verbindungen in der Übertragungsrichtung jeweils vom Label Edge Router 8₁ - 8ₙ zum Label Switch Router7₁ - 7ₙ, sind in jedem Fall ausreichend dimensioniert um den Gesamtverkehr eines Label Edge Routers 8₁ - 8ₙ komplett auf nur eine Plane A, B zu führen, denn die Label Edge Router 8₁ - 8ₙ sind gegen einen Ausfall eines solchen Up-Links geschützt, was insoweit gerade der Sinn der doppelten Anbindung jedes Label Edge Router 8₁ - 8ₙ an das Kernnetz 1 ist.

Die vorstehenden Ausführungen beziehen sich zunächst nur auf eine Richtung der Label Switch Router 7₁ - 7ₙ zu Label Switch Router 8₁ - 8ₙ Übertragungstrecke, in der die vorgeschlagene Entlastung der Netzkante 4₁ wirkt. Insoweit wurde bisher nur die Up-Link Verkehrsbeziehung der Label Edge Router 8₁ - 8ₙ betrachtet. Es muss aber selbstverständlich auch darauf geachtet werden, dass der Datenverkehr im Down-Link (also bezogen auf die entgegengesetzte Übertragungsrichtung von Label Edge Routern 8ₙ links zu Label Edge Routern 8₁ - 8₅ rechts) von der betroffenen Plane A auf die unbeeinträchtigte umgeleitet wird. Demgemäß würde der Datenverkehr hinsichtlich der von dem Label Edge Router 8ₙ beziehungsweise von den - eigentlich auch in größerer Zahl vorhandenen - Label Edge Routern der (in der Zeichnung) linken Seite in entsprechender Weise, das heißt durch eine geeignete Steuerung von Netzelementen durch das Element-Managementsystem, im Hinblick auf eine geänderte Lastverteilung beeinflusst werden.

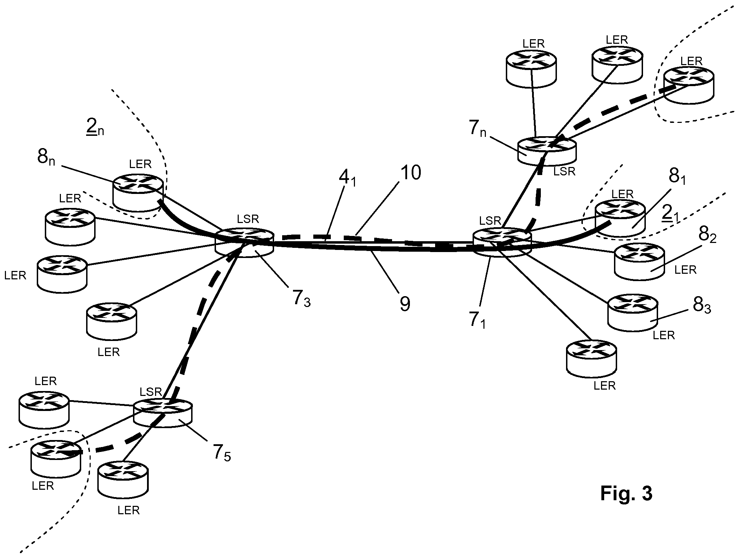

Die Fig. 3 soll in einer ebenfalls symbolischen beziehungsweise schematisierten Darstellung die tatsächlich deutlich komplexeren Verkehrsbeziehungen in einer aber auch hier noch sehr stark vereinfachten Darstellung in angedeuteter Weise verdeutlichen. Wie aus der Fig. zu ersehen ist, können auch andere Verkehrsbeziehungen zu der Last entlang eines Links beitragen. Die betrachtete Netzkante 4₁ ist die zwischen LSR 7₁ und Label Switch Router 7₃. Unter Nutzung dieser Netzkante 4₁ besteht typische direkte Verbindung (Datenpfad 9, durch die fette durchgezogene Linie dargestellt) zwischen zwei Label Edge Routern 8₁,8ₙ, die beide direkt an diejenigen Label Switch Router 7₁,7₃ angebunden sind, die den Ein- und Ausgang dieser Netzkante 4₁ bilden.

Daneben gibt es beispielsweise eine Verbindung (Datenpfad 10, symbolisiert durch die gestrichelte fette Linie), welche neben der betrachteten Netzkante 4₁ Netzkanten mit zwei weitere Label Switch Routern 7₅,7ₙ umfasst. Die an den LSR 7₅ und den LSR 7ₙ angebundenen Label Edge Router tragen dabei nur mittelbar zu der Gesamtlast der die Router LSR 7₁ und LSR 7₃ direkt verbindenden Netzkante 4₁ bei. Eine Möglichkeit, damit umzugehen, wäre ein durchgehendes Monitoring der Beiträge der einzelnen Netzelemente (Zugangsnetze 2₁ - 2ₙ mit Label Edge Routern 8₁ - 8ₙ) zu jedem LSR 7₁ - 7ₙ Link. Dies ist aber eher nicht zu empfehlen, da hierdurch unnötige Komplexität erzeugt wird, was zu einem zusätzlichen betrieblichen Aufwand führt. Stattdessen soll an dieser Stelle darauf hingewiesen werden, dass eine ausreichende Entlastung der Netzkante 4₁ zwischen dem LSR 7₁ und dem LSR 7₃ ausschließlich durch ein Umschalten der lokalen, also der mit den an den Enden dieser Netzkante 4₁ angeordneten Label Switch Routern 7₁,7₃ verbundenen Label Edge Router erreicht werden kann. Um dies in beiden Richtungen zu realisieren, muss nur die Gesamtmenge der Label Edge Router 8₁ - 8ₙ "links" und "rechts" von der insoweit betrachteten Strecke (betroffene Netzkante 4₁ mit den durch sie verbundenen LSR 7₁ - 7ₙ) berücksichtigt werden, in der Fig. 3 die Label Edge Router an den Label Switch Routern LSR 7₁ und LSR 7₃.

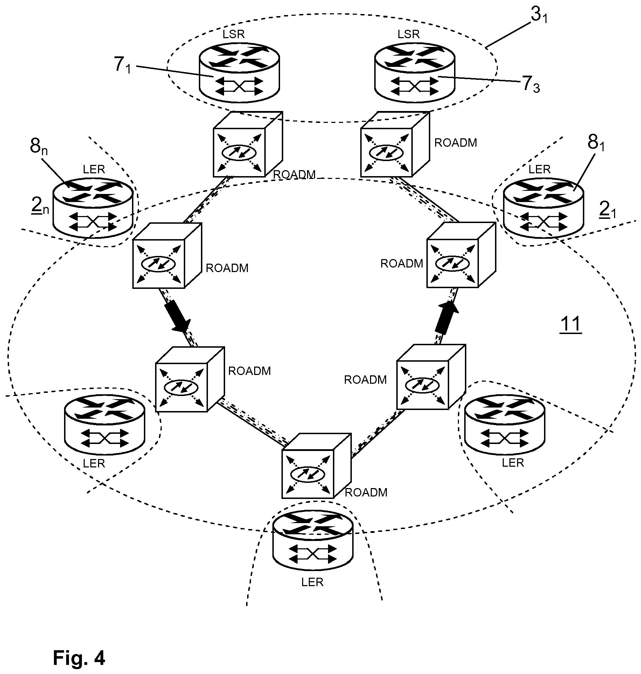

Die Fig. 4 zeigt Details einer möglichen Konfiguration an einem Netzknoten 3₁ des Kernnetzes 1 angeordneter Zugangsnetze 2_{1 -} 2ₙ, wobei stellvertretend für diese Zugangsnetze 2_{1 -} 2ₙ wiederum lediglich deren Label Edge Router 8₁ - 8ₙ (LER) gezeigt sind. Gemäß der in der Figur beispielhaft gezeigten Konfiguration bilden mehrere an einem Netzknoten 3₁ an das Kernnetz 1 angebundene Zugangsnetze 2₁ - 2ₙ eine gemeinsame Zugangsnetzgruppe 11 aus. Wie ersichtlich, sind hierbei die Label Edge Router 8₁ - 8ₙ dieser Zugangsnetzgruppe 11 durch optische, auch ihrer Verbindung mit den Label Switch Routern 7₁,7₃ zweier Planes A; B des Kernnetzes 1 dienende optische Kabel untereinander verbunden.

Die Ankopplung an die optischen Kabel erfolgt in dem gezeigten Beispiel über ROADMs. Trotz der zwischen den Label Edge Routern 8₁ - 8ₙ über die optischen Kabel bestehenden, gewissermaßen ringförmigen Verbindung, sind aber die einzelnen Label Edge Router 8₁ - 8ₙ mit den Label Switch Routern 7₁,7₃ der Planes A, B des Kernnetzes 1 jeweils unmittelbar, das heißt direkt und nicht etwa über einen anderen Label Edge Router 8₁ - 8ₙ, verbunden. Die direkte Verbindung ist hierbei zum einen auf der IP-Ebene gegeben und zum anderen physisch dadurch realisiert, dass die Daten der einzelnen Label Edge Router 8₁ - 8ₙ unter Nutzung jeweils unterschiedlicher Frequenzen des optischen Trägersignals (unterschiedlicher Farben) dem Kernnetz 1 zugeführt werden.

Wie bereits mehrfach betont, sind die in der Praxis bei optischen IP-Netzwerken tatsächlich anzutreffenden Strukturen deutlich komplexer als dies die stark vereinfachten symbolischen Darstellungen der zur Erläuterung der Erfindung an dieser Stelle verwendeten Zeichnungen zeigen. Bezogen auf die Fig. 4 zeigt sich dies dadurch, dass üblicherweise an den Netzknoten 3₁ - 3ₙ den Kernnetzes 1 jeweils eine Mehrzahl von Zugangsnetzgruppen 11 angeordnet ist, welche jeweils hinsichtlich ihrer Struktur mit der in der Figur gezeigten Zugangsnetzgruppe 11 vergleichbar sind. Insoweit ist eine mögliche Ausgestaltung des Verfahrens, welche dieser Struktur mit einer an einem Netzknoten 3₁ - 3ₙ angeordneten Mehrzahl von Zugangsnetzgruppen 11 Rechnung trägt, dadurch gegeben, dass im Fehlerfall eine Änderung der Lastverteilung bewirkt wird, indem eine gesamte Zugangsnetzgruppe 11 gewissermaßen von einer der Planes A, B getrennt und der gesamte Datenverkehr dieser Zugangsnetzgruppe 11 der anderen, nicht von dem Fehler betroffenen Plane A, B zugeführt wird. Die zur Reduzierung des dem Label Switch Router 7₁ - 7ₙ der von dem Fehler betroffenen Plane A. B - bezogen auf die Datenrate - zuzuleitenden Anteils am gesamten Datenaufkommen aller Zugangsnetze 2₁ - 2ₙ des Netzknotens 3₁ - 3ₙ erfolgende Trennung der gezeigten Zugangsnetzgruppe 11 von diesem jeweiligen Label Switch Router 7₁ - 7ₙ wird wiederum mittels der bereits früher erläuterten Mechanismen auf der optischen oder auf der IP-Ebene - Abschalten von Lasern oder intransparent schalten von ROADM-Ports auf optischer Ebene beziehungsweise in der IP-Ebene durch Veränderungen in der Metrik, Herunterfahren von IP-Schnittstellen oder Deaktivierung von IGP für einen oder mehrere Links - realisiert.

## Patentansprüche

1. Verfahren zur Übertragung von Daten in einem IP-Netzwerk mit einem mehrere Netzknoten (3₁ - 3ₙ) und mindestens zwei unabhängige Netzebenen (A, B) mit identischer Struktur aufweisenden Kernnetz (1), dessen Netzknoten (3₁ - 3ₙ) jeweils innerhalb der Netzebenen (A, B) durch Netzkanten (4₁ - 4ₙ) ausbildende Kabel untereinander verbunden sind, und mit jeweils mehreren an den Netzknoten (3₁ - 3ₙ) an jeweils alle Netzebenen (A, B) des Kernnetzes (1) angebundenen Zugangsnetzen (2₁ - 2ₙ), deren dem Kernnetz (1) zuzuführende Datenströme bezüglich der Datenrate auf alle Netzebenen (A, B) des Kernnetzes (1) aufgeteilt werden, wobei das Zusammenwirken von Netzelementen des IP-Netzwerks durch ein Netzmanagementsystem und die Funktion der einzelnen Netzelemente durch ein Element-Managementsystem gesteuert werden und wobei eine von einem Fehler betroffene Netzkante (4₁ - 4ₙ) des Kernnetzes (1), nach einer Restaurierung diese Netzkante (4₁ - 4ₙ) zur Datenübertragung nutzender Datenpfade (5, 9, 10), aufgrund einer Ausstattung von Netzelementen zumindest des Kernnetzes (1) mit Schnittstellen flexibler Datenübertragungsrate, mit einer verminderten Datenübertragungsrate weiterhin nutzbar ist, **dadurch gekennzeichnet, dass** auf den Fehler im Kernnetz (1) und auf die dadurch hinsichtlich der zur Verfügung stehenden Datenübertragungsrate verminderte Kapazität der betroffenen Netzkante (4₁ - 4ₙ) im jeweiligen Übergangsbereich zwischen dem Kernnetz (1) und den an den durch die betroffene Netzkante (4₁ - 4ₙ) verbundenen Netzknoten (3₁ - 3ₙ) an das Kernnetz (1) angebundenen Zugangsnetzen (2₁ - 2ₙ) durch eine Änderung der Lastverteilung reagiert wird, indem
a.) das Netzmanagementsystem eine Information über den an der Netzkante (4₁ - 4ₙ) aufgetretenen Fehler und deren hinsichtlich der Datenübertragungsrate verminderte Kapazität in Echtzeit an das Element-Managementsystem übermittelt und
b.) durch das Element-Managementsystem Netzelemente des IP-Netzwerks auf physischer Ebene oder auf IP Ebene so angesteuert werden, dass zumindest an jedem der durch die fehlerbehaftete Netzkante (4₁ - 4ₙ) verbundenen Netzknoten (3₁ - 3ₙ) die der vom Fehler betroffenen Netzebene (A, B) zugeführte Datenrate zu Lasten der mindestens einen anderen Netzebene (A, B) reduziert wird.

2. Verfahren nach Anspruch 1, wobei die dem Kernnetz (1) an einem Netzknoten (3₁ - 3ₙ) innerhalb einer Zeiteinheit zuzuführende Datenmenge bis zum Eintritt eines Fehlers gleichmäßig auf dessen Netzebenen (A, B) aufgeteilt wird, **dadurch gekennzeichnet, dass** das Element-Managementsystem die jeweiligen Netzelemente bei einem Fehler zur Änderung der Lastverteilung so ansteuert, dass die der von dem Fehler betroffenen Netzebene (A, B) an den durch die betroffene Netzkante (4₁ - 4ₙ) verbundenen Netzknoten (3₁ - 3ₙ) zugführte Datenrate in Relation zu der aufgrund des Fehlers aufgetretenen Verringerung der auf der fehlerhafteten Netzkante (4₁ - 4ₙ) zur Verfügung stehenden Datenübertragungsrate reduziert wird.

3. Verfahren nach Anspruch 1, **dadurch gekennzeichnet, dass** an den durch die betroffene Netzkante (4₁ - 4ₙ) miteinander verbundenen Netzknoten (3₁ - 3ₙ) die dem Kernnetz (1) innerhalb einer Zeiteinheit zuzuführende Datenmenge mindestens jeweils eines der an ihnen an das Kernnetz (1) angebundenen Zugangsnetze (2₁ - 2ₙ) ausschließlich der mindestens einen von dem Fehler nicht betroffenen Netzebene (A, B) des Kernnetzes (1) zugeführt wird.

4. Verfahren nach Anspruch 3, **dadurch gekennzeichnet, dass** eine Änderung der Lastverteilung im Kernnetz (1) auf der IP-Ebene bewirkt wird, wobei an den durch die fehlerhafte Netzkante (4₁ - 4ₙ) miteinander verbundenen Netzknoten (3₁ - 3ₙ), gesteuert durch das Element-Managementsystem, die Verbindung zwischen der vom Fehler betroffenen Netzebene (A, B) des Kernnetzes (1) und mindestens einem Zugangsnetz (2₁ - 2ₙ) unterbrochen wird, indem
a.) die Metrik des diese Verbindung betreffenden Links auf den höchst möglichen Wert gesetzt wird oder
b.) die IP-Schnittstelle des diese Verbindung betreffenden Links heruntergefahren wird oder
c.) für den diese Verbindung betreffenden Link das IGP, Interior Gateway Protocol, deaktiviert wird, so dass dieser Link scheinbar nicht mehr existiert.

5. Verfahren nach Anspruch 3 oder 4, für den Betrieb eines optischen IP-Netzwerks, bei dem die Netzebenen (A, B) des Kernnetzes (1) durch über optische Kabel miteinander verbundene, mit optischen Schnittstellen mit flexibler Datenübertragungsrate ausgestattete Label Switch Router (7₁ - 7ₙ) ausgebildet sind, an welche die Zugangsnetze (2₁ - 2ₙ) über jeweils einen Label Edge Router (8₁ - 8ₙ) angebunden sind, **dadurch gekennzeichnet, dass** eine Änderung der Lastverteilung im Kernnetz (1) auf der die physische Ebene darstellenden optischen Ebene bewirkt wird, indem, gesteuert durch das Element-Managementsystem, je Label Switch Router (7₁ - 7ₙ), für welchen die über ihn dem Kernnetz (1) zugeführte Datenrate reduziert werden soll, mindestens ein zur Aussendung von Daten zu diesem Label Switch Router (7₁ - 7ₙ) vorgesehener Sendelaser oder mindestens ein Empfangslaser eines kohärenten Empfängers dieses Label Switch Routers (7₁ - 7ₙ) ausgeschaltet wird.

6. Verfahren nach Anspruch 3 oder 4, für den Betrieb eines optischen IP-Netzwerks, bei dem die Netzebenen (A, B) des Kernnetzes (1) durch über optische Kabel miteinander verbundene, mit optischen Schnittstellen mit flexibler Datenübertragungsrate ausgestattete Label Switch Router (7₁ - 7ₙ) ausgebildet sind, an welche die Zugangsnetze (2₁ - 2ₙ) über jeweils einen Label Edge Router (8₁ - 8ₙ) angebunden sind, wobei das optische Netzwerk unter Verwendung von ROADMs, nämlich von rekonfigurierbaren Add-Drop-Multiplexern, zumindest in der Verbindung zwischen den Label Switch Routern (7₁ - 7ₙ) und den Label Edge Routern (8₁ - 8ₙ) realisiert ist, **dadurch gekennzeichnet, dass** eine Änderung der Lastverteilung im Kernnetz (1) auf der die physische Ebene darstellenden optischen Ebene bewirkt wird, indem gesteuert durch das Element-Managementsystem, mindestens ein Drop-Port des Ausgangs oder der Add-Port des Eingangs mindestens eines ROADMs, der in der Verbindung zwischen einem Label Edge Router (8₁ - 8ₙ) eines Zugangsnetzes (2₁ - 2ₙ) und dem Label Switch Router (7₁ - 7ₙ) der vom Fehler betroffenen Netzebene (A, B) des Kernnetzes (1) angeordnet ist, intransparent geschaltet wird.

7. Verfahren nach einem der Ansprüche 4 bis 6, für den Betrieb eines optischen IP-Netzwerks, bei dem die Netzebenen (A, B) des Kernnetzes (1) durch über optische Kabel miteinander verbundene, mit optischen Schnittstellen mit flexibler Datenübertragungsrate ausgestattete Label Switch Router (7₁ - 7ₙ) ausgebildet sind, an welche die Zugangsnetze (2₁ - 2ₙ) über jeweils einen Label Edge Router (8₁ - 8ₙ) angebunden sind und bei welchem mehrere Zugangsnetze (2₁ - 2ₙ) an mindestens einem Netzknoten (3₁ - 3ₙ) des Kernnetzes (1) zu einer Zugangsnetzgruppe (11) zusammengefasst sind, wobei die Label Edge Router (8₁ - 8ₙ) der Zugangsnetze (2₁ - 2ₙ) dieser Zugangsnetzgruppe (11) durch die sie auch mit den Label Switch Routern (7₁ - 7ₙ) des mindestens einen Netzknotens (3₁ - 3ₙ) verbindenden optischen Kabel untereinander verbunden sind, **dadurch gekennzeichnet, dass** zur Änderung der Lastverteilung die der von dem Fehler betroffenen Netzebene (A, B), nämlich die den durch die vom Fehler betroffene Netzkante (4₁ - 4ₙ) verbundenen Label Switch Routern (7₁ - 7ₙ) zugeführte Datenrate reduziert wird, indem Datenströme mindestens je einer mit den Label Switch Routern (7₁ -7ₙ) verbundenen Zugangsnetzgruppe (11) durch deren Label Edge Router (8₁ - 8ₙ) ausschließlich der mindestens einen von dem Fehler nicht betroffenen Netzebene (A, B) des Kernnetzes (1) zugeführt werden.

## Claims

1. Method for transmitting data in an IP network having a core network (1) that has multiple network nodes (3₁ - 3ₙ) and at least two independent network levels (A, B) of identical structure and whose network nodes (3₁ - 3ₙ) are each connected among one another within the network levels (A, B) by cables forming network edges (4₁ - 4ₙ), and having in each case multiple access networks (2₁ - 2ₙ) that are interfaced to in each case all network levels (A, B) of the core network (1) at the network nodes (3₁ - 3ₙ) and whose data streams to be supplied to the core network (1) are split, in terms of the data rate, over all network levels (A, B) of the core network (1), wherein the interaction of network elements of the IP network is controlled by a network management system and the function of the individual network elements is controlled by an element management system and wherein an error-affected network edge (4₁ - 4ₙ) of the core network (1), following a restoration of data paths (5, 9, 10) using this network edge (4₁ - 4ₙ) for data transmission, continues to be useable at a decreased data transmission rate on account of network elements of at least the core network (1) being equipped with interfaces having a flexible data transmission rate, **characterized in that** the error in the core network (1) and the consequently decreased capacity, in respect of the available data transmission rate, of the affected network edge (4₁ - 4ₙ) in the respective transition region between the core network (1) and the access networks (2₁ - 2ₙ) interfaced to the core network (1) at the network nodes (3₁ - 3ₙ) connected by the affected network edge (4₁ - 4ₙ) are reacted to by means of a change in the load distribution by virtue of
a) the network management system transmitting information about the error that has occurred at the network edge (4₁ - 4ₙ) and the decreased capacity, in respect of the data transmission rate, of said network edge to the element management system in real time, and
b) the element management system actuating network elements of the IP network on the physical level or on the IP level such that the data rate supplied to the network level (A, B) affected by the error is reduced, to the detriment of the at least one other network level (A, B), at least at each of the network nodes (3₁ - 3ₙ) connected by the erroneous network edge (4₁ - 4ₙ).

2. Method according to Claim 1, wherein the volume of data to be supplied to the core network (1) at a network node (3₁ - 3ₙ) within a unit of time is split uniformly over the network levels (A, B) of said core network until an error occurs, **characterized in that** the element management system actuates the respective network elements in the event of an error, to change the load distribution, such that the data rate supplied to the network level (A, B) affected by the error at the network nodes (3₁ - 3ₙ) connected by the affected network edge (4₁ - 4ₙ) is reduced in relation to the decrease in the data transmission rate available on the erroneous network edge (4₁ - 4ₙ) that has occurred on account of the error.

3. Method according to Claim 1, **characterized in that** at the network nodes (3₁ - 3ₙ) connected to one another by the affected network edge (4₁ - 4ₙ) the volume of data to be supplied to the core network (1) within a unit of time from in each case at least one of the access networks (2₁ - 2ₙ) interfaced to the core network (1) at said network nodes is supplied exclusively to the at least one network level (A, B) of the core network (1) that is not affected by the error.

4. Method according to Claim 3, **characterized in that** a change in the load distribution in the core network (1) is caused on the IP level, wherein at the network nodes (3₁ - 3ₙ) connected to one another by the erroneous network edge (4₁ - 4ₙ) the connection between the network level (A, B) of the core network (1) that is affected by the error and at least one access network (2₁ - 2ₙ) is interrupted, under the control of the element management system, by virtue of
a) the metric of the link relating to this connection being set to the highest possible value or
b) the IP interface of the link relating to this connection being powered down or
c) the IGP, Interior Gateway Protocol, being deactivated for the link relating to this connection, so that this link no longer appears to exist.

5. Method according to Claim 3 or 4, for the operation of an optical IP network, in which the network levels (A, B) of the core network (1) are formed by label switch routers (7₁ - 7ₙ), which are connected to one another via optical cables and equipped with optical interfaces having a flexible data transmission rate, and to which the access networks (2₁ - 2ₙ) are interfaced via in each case one label edge router (8₁ - 8ₙ), **characterized in that** a change in the load distribution in the core network (1) is caused on the optical level representing the physical level by virtue of, for each label switch router (7₁ - 7ₙ) for which the data rate supplied to the core network (1) via said label switch router is supposed to be reduced, at least one transmission laser, intended for transmitting data to this label switch router (7₁ - 7ₙ), or at least one reception laser of a coherent receiver of this label switch router (7₁ - 7ₙ) being switched off, under the control of the element management system.

6. Method according to Claim 3 or 4, for the operation of an optical IP network, in which the network levels (A, B) of the core network (1) are formed by label switch routers (7₁ - 7ₙ), which are connected to one another via optical cables and equipped with optical interfaces having a flexible data transmission rate, and to which the access networks (2₁ - 2ₙ) are interfaced via in each case one label edge router (8₁ - 8ₙ), wherein the optical network is realized by using ROADMs, namely reconfigurable add-drop multiplexers, at least in the connection between the label switch routers (7₁ - 7ₙ) and the label edge routers (8₁ - 8ₙ), **characterized in that** a change in the load distribution in the core network (1) is caused on the optical level representing the physical level by virtue of at least one drop port of the output or the add port of the input of at least one ROADM arranged in the connection between a label edge router (8₁ - 8ₙ) of an access network (2₁ - 2ₙ) and the label switch router (7₁ - 7ₙ) of the network level (A, B) of the core network (1) that is affected by the error being turned non-transparent under the control of the element management system.

7. Method according to one of Claims 4 to 6, for the operation of an optical IP network, in which the network levels (A, B) of the core network (1) are formed by label switch routers (7₁ - 7ₙ), which are connected to one another via optical cables and equipped with optical interfaces having a flexible data transmission rate, and to which the access networks (2₁ - 2ₙ) are interfaced via in each case one label edge router (8₁ - 8ₙ), and in which multiple access networks (2₁ - 2ₙ) are combined at at least one network node (3₁ - 3ₙ) of the core network (1) to form an access network group (11), wherein the label edge routers (8₁ - 8ₙ) of the access network (2₁ - 2ₙ) of this access network group (11) are connected among one another by the optical cables that also connect them to the label switch routers (7₁ - 7ₙ) of the at least one network node (3₁ - 3ₙ), **characterized in that** the load distribution is changed by virtue of the data rate supplied to the network level (A, B) affected by the error, namely the data rate supplied to the label switch routers (7₁ - 7ₙ) connected by the network edge (4₁ - 4ₙ) affected by the error, being reduced by virtue of data streams of at least one access network group (11) each that is connected to the label switch routers (7₁ - 7ₙ) being supplied by the label edge routers (8₁ - 8ₙ) of said access data network group exclusively to the at least one network level (A, B) of the core network (1) that is not affected by the error.

## Revendications

1. Procédé de transmission de données dans un réseau IP comprenant un réseau central (1) qui possède plusieurs noeuds de réseau (3₁ - 3ₙ) et au moins deux plans de réseau (A, B) indépendants ayant une structure identique, dont les noeuds de réseau (3₁ - 3ₙ) sont respectivement reliés entre eux au sein des plans de réseau (A, B) par des câbles formant des bords de réseau (4₁ - 4ₙ), et comprenant respectivement plusieurs réseaux d'accès (2₁ - 2ₙ) connectés respectivement à tous les niveaux de réseau (A, B) du réseau central (1) au niveau des noeuds de réseau (3₁ - 3ₙ), dont les flux de données à acheminer au réseau central (1) sont distribués sur tous les plans de réseau (A, B) du réseau central (1) pour ce qui concerne le débit de données, la coopération des éléments de réseau du réseau IP étant commandée par un système de gestion de réseau et le fonctionnement des éléments de réseau individuels par un système de gestion d'élément, et un bord de réseau (4₁ - 4ₙ) du réseau central (1) qui est concerné par une erreur, après la restauration des chemins de données (5, 9, 10) de ce bord de réseau (4₁ - 4ₙ) utilisés pour la transmission de données, du fait d'un équipement des éléments de réseau d'au moins le réseau central (1) avec des interfaces à débit de transmission de données flexible, pouvant encore être utilisé avec un débit de transmission de données réduit, **caractérisé en ce qu'**en présence de l'erreur dans le réseau central (1) et de la capacité ainsi réduite pour ce qui concerne le débit de transmission de données disponible du bord de réseau (4₁ - 4ₙ) concerné dans la zone de transition respective entre le réseau central (1) et aux noeuds de réseau (3₁ - 3ₙ) connectés à celui-ci par le bord de réseau (4₁ - 4ₙ) concerné, une réaction au lieu au niveau des réseaux d'accès (2₁ - 2ₙ) connectés au réseau central (1) par une modification de la distribution de charge **en ce que**
a) le système de gestion de réseau communique en temps réel, au système de gestion d'élément, une information à propos de l'erreur survenue au niveau du bord de réseau (4₁ - 4ₙ) et sa capacité réduite pour ce qui concerne le débit de transmission de données et
b) les éléments de réseau du réseau IP sur le niveau physique ou sur le niveau IP sont commandés par le système de gestion d'élément de telle sorte que le débit de données acheminé au plan de réseau (A, B) concerné par l'erreur est réduit en faveur de l'au moins un autre plan de réseau (A, B) au moins au niveau de chacun des noeuds de réseau (3₁ - 3ₙ) connectés par le bord de réseau (4₁ - 4ₙ) affecté par l'erreur.

2. Procédé selon la revendication 1, le volume de données à acheminer au réseau central (1) à un noeud de réseau (3₁ - 3ₙ) au sein d'une unité de temps jusqu'à l'apparition d'une erreur étant distribué de manière homogène sur ses plans de réseau (A, B), **caractérisé en ce que** le système de gestion d'élément, en présence d'une erreur, commande les éléments de réseau respectifs en vue de modifier la distribution de la charge de telle sorte que le débit de données acheminé par le plan de réseau (A, B) concerné par l'erreur aux noeuds de réseau (3₁ - 3ₙ) connectés par le bord de réseau (4₁ - 4ₙ) concerné est réduit en relation avec la réduction survenue du fait de l'erreur du débit de transmission de données disponible sur le bord de réseau (4₁ - 4ₙ) affecté par l'erreur.

3. Procédé selon la revendication 1, **caractérisé en ce que** le volume de données à acheminer au réseau central (1) au sein d'une unité de temps, d'au moins respectivement l'un des réseaux d'accès (2₁ - 2ₙ) connectés au réseau central (1), est acheminé aux noeuds de réseau (3₁ - 3ₙ) connectés entre eux par le bord de réseau (4₁ - 4ₙ) concerné est exclusivement acheminé à l'au moins un plan de réseau (A, B) du réseau central (1) non concerné par l'erreur.

4. Procédé selon la revendication 3, **caractérisé en ce qu'**une modification de la distribution de la charge dans le réseau central (1) est effectuée sur le plan IP, la connexion entre le plan de réseau (A, B) du réseau central concerné par l'erreur et au moins un réseau d'accès (2₁ - 2ₙ) étant interrompue au niveau des noeuds de réseau (3₁ - 3ₙ) connectés entre eux par le bord de réseau (4₁ - 4ₙ) affecté par l'erreur, sous la commande du système de gestion d'élément, **en ce que**
a) l'indice de mesure de la liaison concernant cette connexion est fixé à la valeur la plus élevée possible ou
b) l'interface IP de la liaison concernant cette connexion est mise hors service ou
c) le protocole IGP (Interior Gateway Protocol) est désactivé pour la liaison concernant cette connexion, de sorte que cette liaison n'existe visiblement plus.

5. Procédé selon la revendication 3 ou 4, pour le fonctionnement d'un réseau IP optique, avec lequel les plans de réseau (A, B) du réseau central (1) sont réalisés par des routeurs à commutation par étiquette (7₁ - 7ₙ) reliés entre eux par des câbles optiques et équipés d'interfaces optiques au débit de transmission de données flexible, auxquels les réseaux d'accès (2₁ - 2ₙ) sont connectés respectivement par le biais d'un routeur périphérique d'étiquettes (8₁ - 8ₙ), **caractérisé en ce qu'**une modification de la distribution de la charge dans le réseau central (1) est effectuée sur le plan optique qui représente le plan physique **en ce que** sous la commande du système de gestion d'élément, pour chaque routeur à commutation par étiquette (7₁ - 7ₙ) pour lequel il faut réduire le débit de données qui est acheminé par celui-ci au réseau central (1), au moins un laser émetteur destiné à une émission de données vers ce routeur à commutation par étiquette (7₁ - 7ₙ) ou au moins un laser récepteur d'un récepteur cohérent de ce routeur à commutation par étiquette (7₁ - 7ₙ) est mis hors circuit.

6. Procédé selon la revendication 3 ou 4, pour le fonctionnement d'un réseau IP optique, avec lequel les plans de réseau (A, B) du réseau central (1) sont réalisés par des routeurs à commutation par étiquette (7₁ - 7ₙ) reliés entre eux par des câbles optiques et équipés d'interfaces optiques au débit de transmission de données flexible, auxquels les réseaux d'accès (2₁ - 2ₙ) sont connectés respectivement par le biais d'un routeur périphérique d'étiquettes (8₁ - 8ₙ), le réseau optique étant réalisé en utilisant des ROADM, à savoir des multiplexeurs d'insertion-extraction reconfigurables, au moins dans la connexion entre les routeurs à commutation par étiquette (7₁ - 7ₙ) et les routeurs périphériques d'étiquettes (8₁ - 8ₙ), **caractérisé en ce qu'**une modification de la distribution de la charge dans le réseau central (1) est effectuée sur le plan optique qui représente le plan physique **en ce que** sous la commande du système de gestion d'élément, au moins un port d'extraction de la sortie ou le port d'insertion de l'entrée d'au moins un ROADM qui est disposé dans la connexion entre un routeur périphérique d'étiquettes (8₁ - 8ₙ) d'un réseau d'accès (2₁ - 2ₙ) et le routeur à commutation par étiquette (7₁ - 7ₙ) du plan de réseau (A, B) concerné par l'erreur du réseau central (1), est rendu opaque par commutation.

7. Procédé selon l'une des revendications 4 à 6, pour le fonctionnement d'un réseau IP optique, avec lequel les plans de réseau (A, B) du réseau central (1) sont réalisés par des routeurs à commutation par étiquette (7₁ - 7ₙ) reliés entre eux par des câbles optiques et équipés d'interfaces optiques au débit de transmission de données flexible, auxquels les réseaux d'accès (2₁ - 2ₙ) sont connectés respectivement par le biais d'un routeur périphérique d'étiquettes (8₁ - 8ₙ) et avec lequel plusieurs réseaux d'accès (2₁ - 2ₙ) sont regroupés au niveau d'au moins un noeud de réseau (3₁ - 3ₙ) du réseau central (1) en un groupe de réseaux d'accès (11), les routeurs périphériques d'étiquettes (8₁ - 8ₙ) des réseaux d'accès (2₁ - 2ₙ) de ce groupe de réseaux d'accès (11) étant reliés entre eux par les câbles optiques qui les relient également aux routeurs à commutation par étiquette (7₁ - 7ₙ) de l'au moins un noeud de réseau (3₁ - 3ₙ), **caractérisé en ce qu'**en vue de modifier la distribution de charge, le débit de données acheminé au plan de réseau (A, B) concerné par l'erreur, à savoir aux routeurs à commutation par étiquette (7₁ - 7ₙ) connectés par les bords de réseau (4₁ - 4ₙ) concernés par l'erreur, est réduit en acheminant les flux de données respectivement d'au moins un groupe de réseaux d'accès (11) connecté aux routeurs à commutation par étiquette (7₁ - 7ₙ) à travers ses routeurs périphériques d'étiquettes (8₁ - 8ₙ) exclusivement à l'au moins un plan de réseau (A, B) non concerné par l'erreur du réseau central (1).
